# EUROPEAN PATENT APPLICATION

(11) **EP 1 480 135 A2**
(43) Date of publication of application: **24.11.2004**
(21) Application number: 04012198.0
(22) Date of filing: 24.05.2004
(51) Int. Cl.: G06F 17/30

(54) **System and method of determining impact of data model changes**

(30) Priority: 22.05.2003 CA 2429335
(71) Applicant: Cognos Incorporated, Ottawa, Ontario K1G 4k9 (CA)
(72) Inventor: Potter Charles Mike,, Ontario K2G 6H4 (CA); Vierich Ralf,, Ontario K2K 1N8 (CA)
(74) Representative: HOEGER, STELLRECHT & PARTNER Patentanwälte

(57) **Abstract**

An impact analysis system for determining impact of a change to a data model is provided. The impact analysis system comprises a model comparison module for detamining the differences between a published model and a modified model, a repert generator for generating a report of the modified model, and a report comparison module for comparing a report of the published model with the report of the generated model.

## Description

### FIELD OF THE INVENTION

The invention relates to a system and method of determining impact of model changes.

### BACKGROUND OF THE INVENTION

Data modellers sometimes wish to view reports of a data model. A data modeller may wish to make changes to a data model. When changes are made to a data model, such changes can affect the report of the data model. Sometimes, the changes cause unintended consequences. It is desirable, at the design stage, to know how reports of a data model would be affected prior to implementing a change to a data model (i.e., publishing a data model).

Some modelling changes, such as deleting query items that a report is using, cause a report to be unable to run the next time the model is published. There are several changes that can be made in the model that either cause the report to not run or may cause the report to produce different results. For example, data model changes that can cause a report to be unable to execute include deleting query subject or query items, renaming query items or query subjects, and removing joins that would connect query subjects that are being referenced in a report. Moreover, changes to a data model that could potentially cause the report to produce different results include deleting a join and thereby causing a different join to be used when resolving the report query, changing a calculation, and changing or adding a filter to a query subject.

Currently, data modellers have to visually inspect changes to a data model by visually inspecting a copy of an old model with an amended model. The data modellers then must manually determine what reports may be impacted. Visual inspection of large data models is difficult, onerous and error-prone. Moreover, no method exists to actually see which reports rely on what parts of a data model, how the report generated from the data model will actually look, or if the report will work at all.

### SUMMARY OF THE INVENTION

It is an object of the present invention to solve one or more of the problems described above.

In accordance with an embodiment of the present invention, there is provided an impact analysis system for determining the impact of a change to a data model. The impact analysis system comprises a model comparison module for determining the differences between a published model and a modified model, a report generator for generating a report of the modified model, and a report comparison module for comparing a report of the published model with the report of the generated model.

In accordance with another embodiment of the present invention, there is provided an impact analysis system for determining the impact of a metadata model change. The impact analysis system comprises a model comparison module for determining the differences between a published model and a modified model, a report generator for generating a report of the mooted model, and a report comparison module for comparing a report of the published model with the report of the generated model.

In accordance with another embodiment of the present invention, there is provided a method of analysing the impact of a change to a data model. The method comprises the steps of generating a temporary metadata package of the data model with the change, comparing the temporary metadata package with a published metadata package of the data model, and generating a list of differences between the temporary metadata package and the published metadata package.

In accordance with another embodiment of the present invention, there is provided a method of analysing the impact of a change to a data model. The method comprises the steps of generating a temporary metadata package of the data model with the change, generating a list of differences between the temporary metadata package and a published metadata package, displaying the list of differences, generating a temporary report corresponding to the data model with the change, comparing the temporary report with a saved report, and generating a list of report differences,

In accordance with another embodiment of the present invention, there is provided a computer data signal embodied in a carrier wave and representing sequences of instructions which, when executed by a processor, cause the processor to perform a method of analysing the impact of a change to a data model. The method comprises the steps of generating a temporary metadata package of the data model with the change, comparing the temporary metadata package with a published metadata package of the data model, and generating a list of differences between the temporary metadata package and the published metadata package.

In accordance with another embodiment of the present invention, there is provided a computer-readable medium having computer readable code embodied therein for use in the execution in a computer of a method of analysing the impact of 4 change to a data model. The method comprises the steps of generating a temporary metadata package of the data model with the change, comparing the temporary metadata package with a published metadata package of the data model, and generating a list of differences between the temporary metadata package and the published metadata package.

In accordance with another embodiment of the present invention, there is provided a computer program product for use in the execution in a computer of an impact analysis system for determining the impact of a change to a data model. The computer program product comprises a repository for storing a report of a metadata model, a report server for creating a report of a modified metadata model, and a modelling application for comparing the stored report of the metadata model and the created report of the modified metadata model.

### BRIEF DESCRIPTION OF THE DRAWINGS

Figure 1 shows an example of an impact analysis system, in accordance with an embodiment of the present invention.
Figure 2 shows a layout of another example of an impact analysis system, in accordance with an embodiment of the present invention.
Figure 3 shows in a flowchart an example of a method of analysing the impact of a change to a data model, in accordance with an embodiment of the present invention.
Figure 4 shows in a flowchart another method of analysing the impact of a change to a data model, in accordance with an embodiment of the present invention.
Figure 5 is a screen shot of a user interface dialog that displays a list of differences between a current package and an exiting package, in accordance with the impact analysis system.
Figure 6 is a screen shot of a user interface dialog that displays reports that reference selected model items, in accordance with the impact analysis system.

### DETAILED DESCRIPTION OF THE PREFERRED EMBODIMENTS

A data modelling product allows users to import metadata from one or more data sources and transform it into a business-oriented model that can be used to create reports. Reports may be based on metadata that has been "published" from the data modelling tool. Reports can be saved and later edited or run.

The management of metadata in a data modelling tool and the management of reports in a report management tool can be separate operations done within different applications and likely by different people. If a model designer using a data modelling tool makes changes to the metadata, for example, deleting query items or adding filters etc., it is desirable to have a way to determine the impact of these changes to existing saved reports. Metadata changes may be seen by visually inspecting copies of an old model and a new model. However, it is unlikely that a visual inspection will show which reports rely on what pans of the metadata.

One embodiment of the present invention relates to the impact of publishing metadata changes that is performed from a modeling application. Therefore, the impact of metadata changes is determined relatively quickly, before the changes are actually made. Based on the publish changes, a user receives a list and views the effected reports. The ability to quickly ascertain the publish changes and report impact can be done in a single action.

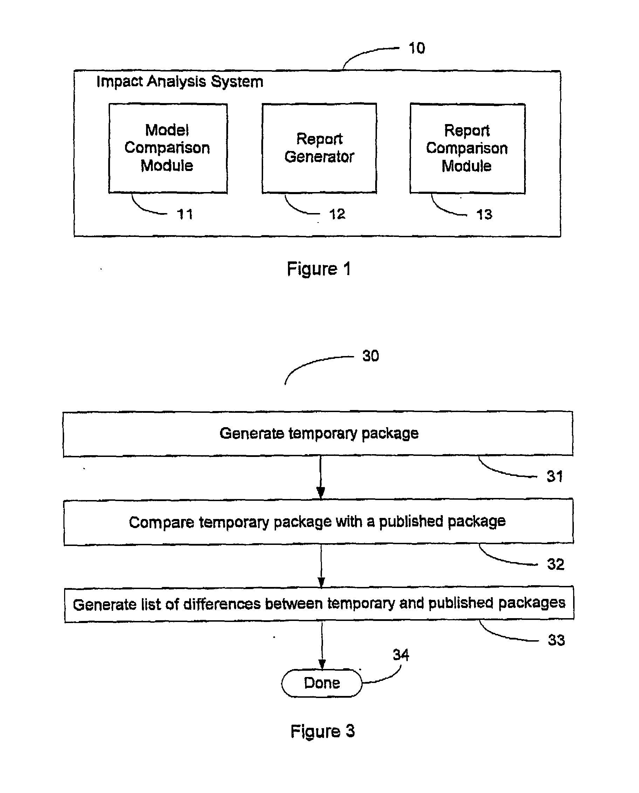

Figure 1 shows an example of an impact analysis system 10, in accordance with an embodiment of the present invention. The impact analysis system 10 comprises a model comparison module 11 for determining the differences between a published model and a modified model, a report generator 12 for generating a report of the modified model, and a report comparison module 13 for comparing a report of the published model with the report of the generated model. Other components may be added, such as a repository to store published models and their reports.

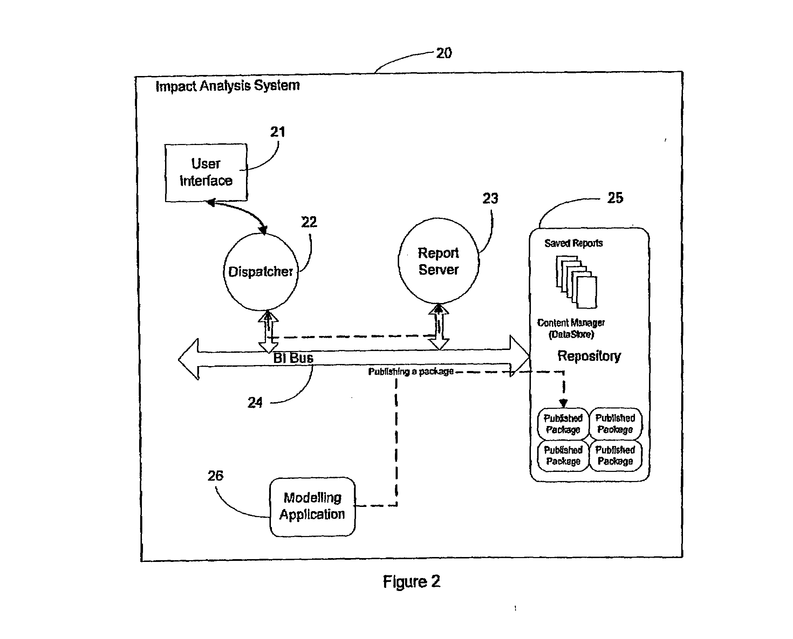

Figure 2 shows a layout of another example of an impact analysis system 20, in accordance with an embodiment of the present invention. The impact analysis system 20 comprises a user interface (UI) 21, a dispatcher 22, a report server 23, a business intelligence (BI) bus 24, a repository 25 for storing models and reports, and a modelling application 26. The user interface 21 is a browser-based interface from which a user authors and runs reports. The UI 21 communicates with a dispatcher 22 that directs requests to the report server 23 through the BI bus 24. The report server 23 is a process that fetches the required metadata from a repository 25 through the BI bus 24. The report server 23 uses the fetched metadata to build a report from the report server 23 and sends the results back to the UI 21, through the BI bus 24. Reports saved in the repository 25 are based on metadata that is published from the modelling application26. The modelling application 26 may comprise the model comparison module 11 and the report comparison module 13. The report server 23 may comprise the report generator 12. Communication between components in the impact analysis system 20 is performed through the BI bus 24.

More than one package of metadata can be published. Whenever an existing package is republished the old package may be overwritten. Alternatively, a model versioning scheme may be set up to record historical changes.

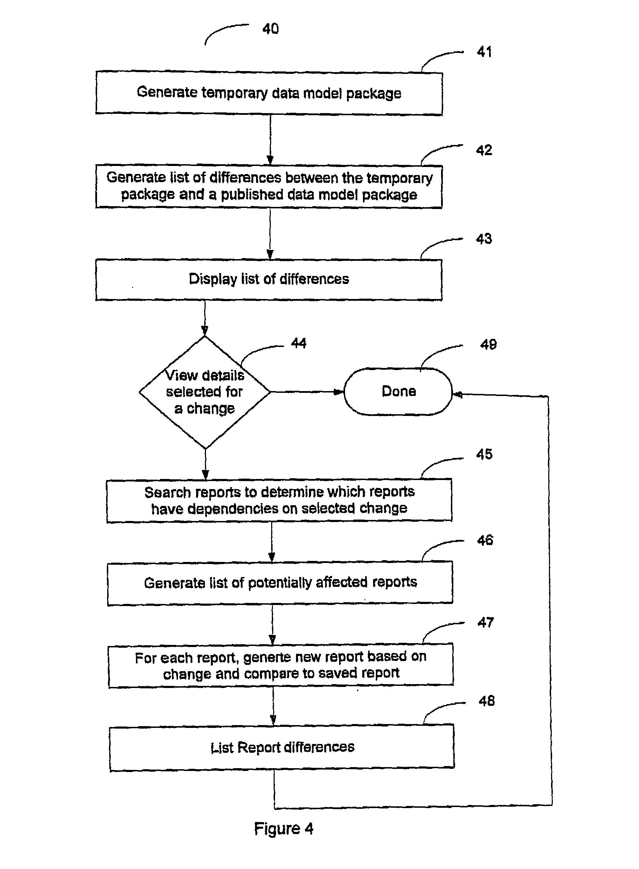

Figure 3 shows in a flowchart an example of a method of analysing the impact of a change to a data model (30), in accordance with an embodiment of the present invention. Before publishing changes to a model, the model designer can ask for a publish impact list. The modelling application 26 generates a temporary package (31) that represents the metadata package (or model) that would be published according to the proposed changes. The modelling application then compares the temporary package to the metadata package that is already published (32). The modelling application then generates a list of differences found between the temporary and published packages (33). The method is done (34).

Other steps may be added to the method (30). A window may display to the user the list of the changes between the temporary and published packages. Each change may be decorated with an icon to indicate the potential impact the changes may have on reports. Preferably, two icons are used: an exclamation mark and a warning symbol. The exclamation mark denotes that the report will no longer nm if the temporary package is published. This is due to a query subject or item being renamed or deleted. A warning symbol denotes that the report will likely run but the results may be affected. This is typically caused when changing the underlying SQL in a query subject or a calculation.

The user may then select one or more changes and initiate a search through the saved reports in the repository 25 to see if any reports have dependencies on the items that have been changed. The user is presented with a list of potentially affected reports. From this list they can launch the report editor to either make the changes before publishing or to simply review the report.

Figure 4 shows in a flowchart another example of a method of analysing the impact of a change to a data model (40), in accordance with an embodiment of the present invention. The method begins with generating a temporary metadata package according to the proposed changes (41). Next, a list of differences between the temporary and published packages is generated by comparing the two packages (42). Preferably, the list of differences is a list of items in the data model that may be affected. The list of difference is displayed (43). If a user selects to view details of a listed difference (44), a search through saved reports is performed to determine if any reports have dependencies on the listed items in the model that is different (45). A list of potentially affected reports is generated (46). For each potentially affected report, a new report corresponding to the changed data model is generated and compared to the associated saved report (47). These report differences are listed (48) and the method is done (49). A user may use the report differences listed to amend a report before changes are made to the data model.

Advantageously, with the impact analysis system 10, 20 a user is notified how reports are impacted if the user publishes a temporary package. However, the user may not always be able to fix the report until they publish the package. In such a scenario, the user is still able to determine the reports that are affected. The impact analysis information aids a user to assess the importance of the report and schedule a time to repair (re-edit) the report or notify the report author that their reports will need work after the publish is done. For example, a user may decide to publish the temporary package on a weekend to allow for sufficient time to correct reports for a Monday.

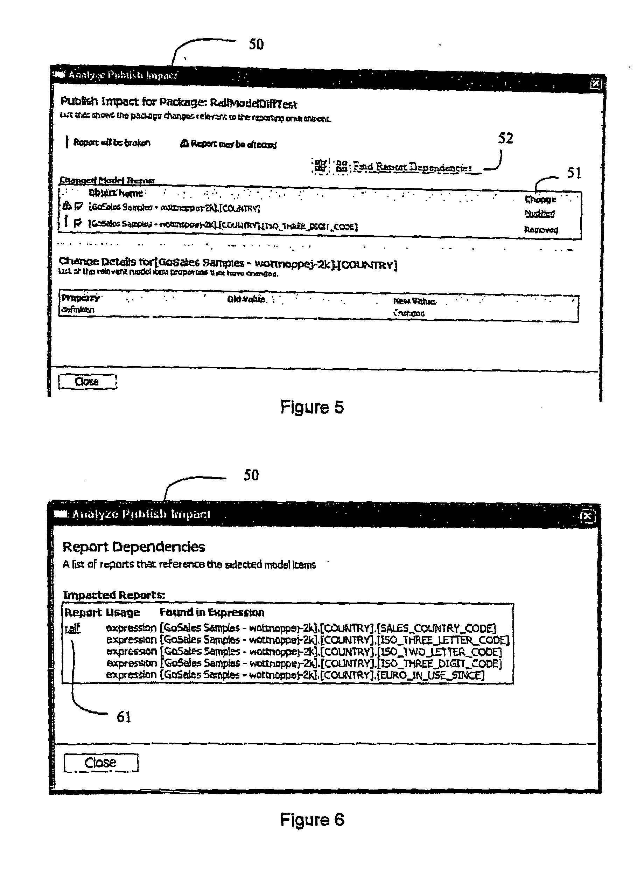

The screen captures (Figure 5, Figure 6) show examples of dialogs of an example of an implementation of the impact analysis feature in a modelling application. Figure 5 shows the publish impact dialog 50 that displays the list of differences between the current package (that will be published) and the existing package (the one that has already been published). Selecting the hyperlink in the "change" column 51 on the right hand side displays the change details in the bottom table. Selecting the "Find Report Dependencies..," link 52 will launch the dialog 60 shown in Figure 6. The report dependencies dialog 60 is dialog that lists the reports that make reference to the selected model items shown in Figure 5. Selecting the link in the "Report" column 61 willlaunch the related report-editing tool.

The impact analysis system 10, 20 allows publish impacts on the reporting environment to be determined at the modelling stage. It 10, 20 also allows the model designer to make changes to the data model and determine the impact of those changes relatively quickly. It 10, 20 also reduces the possibility of downtime for the reporting system in case a published package inadvertently breaks one or more reports.

The impact analysis system 10,20 according to the present invention, and the methods described above, may be implemented by any hardware, software or a combination of hardware and software having the function described above. The software code, either in its entirety or a part thereof, may be stored in a computer readable memory. Further, a computer data signal representing the software code that may be embedded in a carrier wave may be transmitted via a communication network. Such a computer readable memory and a computer data signal are also within the scope of the present invention, as well as the hardware, software and the combination thereof.

While particular embodiments of the present invention have been shown and described, changes and modifications may be made to such embodiments without departing from the true scope of the invention.

## Claims

1. An impact analysis system for determining the impact of a change to a data model, the
a model comparison module for determining the differences between a published model and a modified model;
a report generator for generating a report of the modified model; and
a report comparison module for comparing a report of the published model with the report of the generated model.

2. The impact analysis system as claimed in claim 1, further comprising a repository for storing models and reports.

3. An impact analysis system for determining the impact of a metadata model change, the system comprising:
a repository for storing a report of a metadata model;
a report server for creating a report of a modified metadata model; and
a modelling application for comparing the stored report of the metadata model and the created report of the modified metadata model.

4. The impact analysis system as claimed in claim 3, further comprising a user interface for communicating with the impact analysis system.

5. The impact analysis system as claimed in claim 3, further comprising a dispatcher module for directing user requests to the report server.

6. The impact analysis system as claimed in claim 3, further comprising a business intelligence bus for carrying requests in the impact analysis system.

7. A method of analysing the impact of a change to a data model, the method comprising the steps of:
generating a temporary metadata package of the data model with the change;
comparing the temporary metadata package with a published metadata package of the data model; and
generating a list of differences between the temporary metadata package and the published metadata package.

8. The method as claimed in claim 7, wherein the step of comparing comprises the steps of:
generating a temporary report corresponding to the data model with the change;
comparing the temporary report with a saved report; and
generating a list of report differences.

9. The method as claimed in claim 8, wherein a plurality of saved reports are analysed.

10. The method as claimed in claim 9, further comprising the steps of:
storing the published metadata packages; and
storing the saved reports.

11. A method of analysing the impact of a change to a data model, the method comprising the steps of:
generating a temporary metadata package of the data model with the change;
generating a list of differences between the temporary metadata package and a published metadata package;
displaying the list of differences;
generating a temporary report corresponding to the data model with the change;
comparing the temporary report with a saved report; and
generating a list of report differences.

12. A computer data signal embodied in a carrier wave and representing sequences of instructions which, when executed by a processor, cause the processor to perform a method of analysing the impact of a change to a data model, the method comprising steps of:
generating a temporary metadata package of the data model with the change;
comparing the temporary metadata package with a published metadata package of the data model; and
generating a list of differences between The temporary metadata package and the published metadata package.

13. A computer-readable medium having computer readable code embodied therein for use in the execution in a computer of a method of analysing the impact of a change to a data model, the method comprising steps of:
generating a temporary metadata package of the data model with the change;
comparing the temporary metadata package with a published metadata package of the data model; and
generating a list of differences between the temporary metadata package and the published metadata package.

14. A computer program product for use in the execution in a computer of an impact analysis system for determining the impact of a change to a data model, the computer program product comprising:
a model comparison module for determining the differences between a published model and a modified model;
a report generator for generating a report of the modified model; and
a report comparison module for comparing a report of the published model with the report of the generated model.
